# EUROPEAN PATENT APPLICATION

(11) **EP 1 052 153 A2**
(43) Date of publication of application: **15.11.2000**
(21) Application number: 00109160.2
(22) Date of filing: 08.05.2000
(51) Int. Cl.: B60T 13/58, B60L 7/10

(54) **Braking device with energy recovery for electrically propelled vehicles**

(30) Priority: 10.05.1999 IT VI990092
(71) Applicant: SME Elettronica S.p.A., 36071 Arzignano (VI) (IT)
(72) Inventor: Pace, Adolfo, 36071 Arzignano (VI) (IT)
(74) Representative: Bonini, Ercole

(57) **Abstract**

A braking device (1) for electrically propelled vehicles comprising: one or more wheels (2, 3) connected to a kinematic system (4); an electric traction motor (5) mechanically coupled to the kinematic system (4); an electric accumulator battery (7) connected to the electric motor (5) by an electric converter (6); a control microprocessor (8) electrically wired to the electric converter (6) and provided with one or more terminals (8a) electrically wired to the means of controlling said vehicle. The braking device (1) comprises first means of braking (9, 10) with friction-induced energy dissipation acting on the wheels (2, 3) and second means of braking (11) with kinetic energy recovery acting on the kinematic system (4), both of the means of braking being functionally connected to an actuator pedal (12) for use by the driver.

## Description

The invention concerns a braking device with energy recovery especially suited to being applied to electrically propelled vehicles for example forklift trucks.

It is known that braking systems currently applied to vehicles, basically have means of friction that slow down the vehicle until it stops, dissipating its kinetic energy through friction.

Accordingly the traditional drum brake is known that consists of metal shoes shaped in the form of a circular sector lined with high friction coefficient material that are radially pushed by hydraulically operated actuators against a cylindrical drum fixed to the wheel.

Disk braking systems are also known, that take their name, as is known, from their metal disk fixed to the wheel that is braked by the friction produced by metal pads lined with high friction coefficient material which are tightened against it by the action of hydraulically actuated callipers.

The aforesaid known braking systems, together with their renowned efficacy and operating safety, nevertheless also have some acknowledged inconveniences.

One of these inconveniences is undoubtedly represented by the need to periodically change the friction elements that wear out during use.

Another inconvenience is that that while braking the high friction coefficient material that lines the shoes and the pads discharge microscopic fibrils into the air that are highly pollutant and particularly hazardous to the health of personnel working in the environment where the vehicle operates.

Last but not least, an inconvenience is that while braking the vehicle's entire kinetic energy is dissipated through friction and therefore in heat, without any chance of being able to recover it.

Said inconveniences are particularly critical when the vehicle is a forklift truck. In fact with forklift trucks, which entail quite substantial weights that are continually braked and accelerated during use, their brakes undergo particular wear and consequently require frequent and also costly maintenance.

What's more forklift trucks usually move within confined spaces in the presence of persons and therefore the pollution problems due to dispersion of airborne fibrils of friction material that are discharged during braking are particularly critical and especially important.

This invention intends to overcome the aforesaid inconveniences.

In particular, a first scope of the invention is to produce a braking device that, against known braking devices and in the same working conditions, gives rise to a much lower wear on the brakes.

An additional scope is that the braking device invention allows, while braking, recovery of part of the vehicle's kinetic energy.

Last but not least, a scope is that the braking device invention reduces the environmental pollution produced when using known braking devices.

The aforesaid scopes are achieved by producing a braking device for electrically propelled vehicles which, in accordance with the main claim, comprises:
- one or more wheels connected to at least one kinematic system;
- at least one electric traction motor mechanically coupled to said kinematic system;
- at least one electric accumulator battery connected to said electric motor by an electric converter;
- at least one control microprocessor electrically wired to said electric converter and provided with one or more terminals electrically wired to means of controlling said vehicle,
   and is characterised in that it comprises first means of braking with friction-induced energy dissipation acting on said wheels and second means of braking with kinetic energy recovery acting on said at least one kinematic system, both of said means of braking being functionally connected to an actuator pedal for use by the driver.

According to a preferred form of execution the second means of braking consists of the same electric traction motor that is of the reversible type suited to functioning as generator and therefore to brake the vehicle when the motor is drawn in rotation by the kinematic system consisting of a differential. A mechanical-electric transducer is connected to the pedal and is electrically wired to the microprocessor so that for every movement of the pedal the transducer sends an electrical signal to the microprocessor that recovers the vehicle's kinetic energy by means of the electric converter under the form of electrical energy stored in the battery and produced by the motor being made to rotate by the differential. An advantage of the braking device invention, against known types of braking devices, is that it allows to reduce the running costs of the vehicle it is applied to because by reducing the wear on the brakes, it also reduces the maintenance work.

Another advantage of the braking device invention is that by recovering the vehicle's kinetic energy under the form of electrical energy in the battery, it allows to increase the vehicle's running autonomy.

Another similar advantage is gained by the braking device invention because it also guarantees a higher level of safety in braking since the braking action that is exerted directly on the wheels is integrated with the braking action developed by the differential.

Said scopes and advantages will be better explained during the description of a preferred form of execution of the invention that is given as a guideline but not a limitation and referring to the attached diagrams, where:
- fig. 1 shows a circuit diagram of the braking plant under this invention;
- fig. 2 shows a graph that illustrates the variation in braking capacity of the plant invention as a function of the pressure exercised on the pedal.

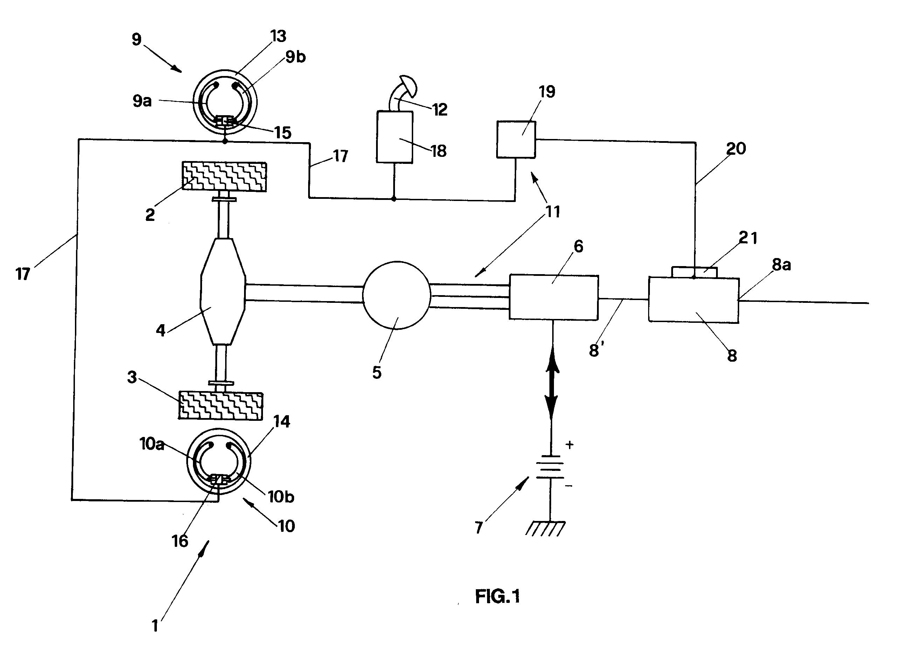

As can be seen in fig. 1 the braking device invention, generally indicated by 1, is especially suited to being applied to an electrically propelled vehicle which, as can again be seen fig. 1, comprises a pair of wheels 2, 3 connected to a kinematic system consisting of a differential 4, this in turn being mechanically coupled to an electric motor 5 which makes it rotate.

As an alternative the differential can be substituted by a reduction unit.

The electric motor 5 is connected to an electric accumulator battery 7 by an electric converter 6 which is electrically wired to a microprocessor 8 provided with input terminals, generally indicated by 8a, connected to the vehicle's means of control.

According to the invention the braking device comprises first means of braking 9, 10 with friction-induced energy dissipation acting on the wheels 2, 3 and second means of braking 11 with kinetic energy recovery acting on the differential 4, both means of braking being functionally connected to an actuator pedal 12 for use by the driver.

With regards to the first means of braking 9, 10, these comprise means of attrition consisting of a pair of shoes 9a, 9b and 10a, 10b respectively, which work by contact with the friction surfaces that are represented by the cylindrical surfaces of drums 13, 14 respectively, fixed to each wheel.

Both pairs of shoes 9a, 9b and 10a, 10b are connected to means of impelling consisting of hydraulic pistons 15, 16 respectively that belong to a hydraulic circuit that comprises a pump 18 coupled to the pedal 12 and piping 17 containing oil under pressure.

With regards to the second means of braking 11, this comprises the same electric traction motor 5, of the reversible type suited to functioning as generator-brake to absorb the kinetic energy of the differential 4, and a mechanical-electric transducer 19 that is connected to the piping 17 of the hydraulic circuit, downline from the pump 18.

An electric line 20 connects the transducer 19 to an interface 21, connected to the microprocessor 8, for the analogue reading of the voltage that the transducer 19 supplies to the microprocessor.

When the electric motor 5 functions as generator-brake, it is made to rotate by the differential and transforms the kinetic energy of the forklift into electrical energy that through the electric converter 6 float charges the accumulator battery 7 as will be described in more detail below.

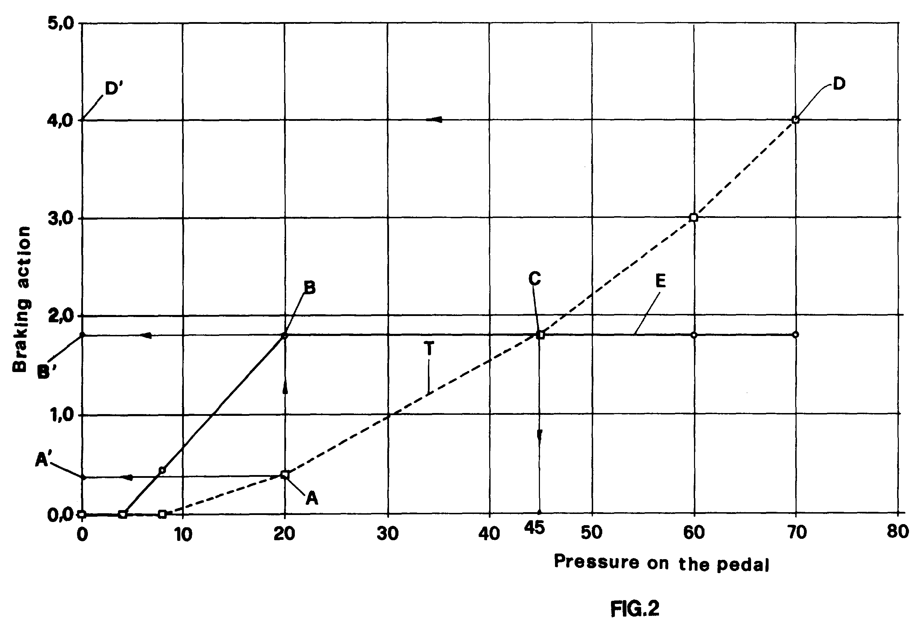

In practise the operation of the braking device invention is reviewed by referring to the graphs in fig. 2 illustrated in a system of co-ordinates where the x-axis gives the pressure expressed in bars delivered by the pump 18 when the pedal 12 is pressed and the y-axis gives the braking capacity of the braking device.

More precisely:
- solid line E represents the braking action curve of the second means of braking 11 with kinetic energy recovery;
- dotted line T represents the braking capacity curve of the first means of braking 9, 10 with friction-induced energy dissipation.

When the driver applies even a rather limited pressure to the pedal 12, for example of 20 bar, the first means of braking exercises on wheels 2, 3 the braking action indicated by A' that corresponds to the y-axis value of point A where the x-axis value of 20 bars pressure intersects the dotted curve T.

At the same time the transducer 19 transforms the pressure signal generated by the pump 18 into a proportional electrical signal that is sent through the electric line 20 to the interface 21 and then the microprocessor 8.

The microprocessor 8, in turn, through the electric line 8' sends another electrical signal to the electric converter 6 and "informs" it that a braking action is underway thereby setting the motor 5 to function as a generator-brake.

The differential 4 is thereby provided with a braking torque indicated by B' that corresponds to the y-axis value of point B where the x-axis value of 20 bar pressure intersects the solid curve E.

So it can be seen that the overall braking action on the vehicle is mainly exercised on the differential rather than on the wheels and it is therefore mainly exercised by absorption of kinetic energy and not by friction.

The kinetic energy absorbed by the differential is transformed into electrical energy by the motor 5 that functions as a generator and the electric converter 6 sends it to the battery 7 that is thereby recharged.

In this manner the invention achieves the scopes of braking the vehicle with very limited wear on the shoes and the drums applied to the wheels and recovering large part of the vehicle's kinetic energy under the form of electrical energy that is used to recharge the accumulator battery.

If, by means of the pump 18 a pressure of 20 bar is exercised, this results in the braking action represented by point B', capable of stopping the vehicle in all normal braking conditions that should arise during use.

To emphasise the reduction in consumption obtained on the wheels' shoes and drums, it is sufficient to see that to apply the same braking capacity B' although working solely with the first means of braking, the pump would have to develop a pressure of approximately 45 bar, corresponding to the Y-axis value point C where curves T and E intersect.

In an emergency, the braking system invention still keeps the characteristic of being able to act directly on the wheels developing far greater braking capacity than B'.

In fact, if necessary the driver may exercise a very large pressure on the pedal, stopping the vehicle immediately by acting primarily on the wheels.

So for example, as can be seen in fig. 2, if a 70 bar pressure is exercised on the pedal this will give a braking capacity corresponding to point D' and referring to the y-axis value of point D on the dotted curve T.

When braking the motor 5 always performs as a generator-brake and with the electric converter 6, that is actually a torque inverter, float charges the accumulator battery 7 systematically obtaining the recovery of part of the vehicle's kinetic energy as electrical energy for recharging the battery.

Experimental tests have allowed to ascertain that during a normal battery charge and discharge cycle, approximately 10% energy recovery is obtained and therefore 10% greater autonomy of the vehicle.

On the basis of the above explanations it is clear that the device invention achieves the set scopes.

It is clear that the device invention as it is described above, can be applied to any type of electrically propelled vehicle.

Even if the invention has been described with reference to the figures illustrated in the attached diagrams, it is clear that it may undergo several changes and variants in execution all falling under the inventive concept expressed by the attached claims and therefore protected by this patent.

## Claims

1. Braking device for electrically propelled vehicles comprising:
- one or more wheels connected to at least one kinematic system;
- at least one electric traction motor mechanically coupled to said kinematic system;
- at least one electric accumulator battery connected to said electric motor by an electric converter;
- at least one control microprocessor electrically wired to said electric converter and provided with one or more terminals electrically wired to the means of controlling said vehicle,
**characterised in that** it comprises first means of braking (9, 10) with friction-induced energy dissipation acting on said wheels (2, 3) and second means of braking (11) with kinetic energy recovery acting on said at least one kinematic system (4), both of said means of braking being functionally connected to an actuator pedal (12) for use by the driver.

2. Braking device (1) according to claim 1) **characterised in that** said second means of braking (11) comprises said electric motor (5) and at least one mechanical-electric transducer (19) connected to said pedal (12) and electrically wired to said microprocessor (8), said transducer being suited to providing the microprocessor (8) with an electrical signal proportional to a pressure signal generated by the movement of said pedal (12).

3. Braking device (1) according to claim 1) or 2) **characterised in that** said electric motor (5) is a reversible motor of the generator-brake type.

4. Braking device (1) according to claim 2) **characterised in that** said pedal (12) is mechanically coupled to at least one pump (18) that belongs to a hydraulic circuit, which also comprises a pipe (17) that connnects with said first means of braking (9, 10) and with said transducer.

5. Braking device (1) according to claim 1) or 4) **characterised in that** said first means of braking (9, 10) comprises means of attrition (9a, 9b; 10a, 10b) working by contact with the friction surfaces (13, 14) belonging to said wheels (2, 3) and connected to means of impelling (15, 16) hydraulically connected to said pipe (17).

6. Braking device (1) according to claim 1) **characterised in that** said at least one kinematic system is a differential (4).

7. Braking device (1) according to claim 1) **characterised in that** said at least one kinematic system is a reduction unit.

8. Braking device (1) according to claim 2) **characterised in that** said microprocessor (8) and said transducer (19) are electrically wired together by an electric line (20) and an interface (21) for the analogue reading to the voltage supplied by said transducer (19).

9. Braking device (1) according to claim 1) **characterised in that** said electric converter (6) is a torque inverter.

10. Braking device (1) according to claim 5) **characterised in that** said means of attrition consist of shoes (9a, 9b; 10a, 10b) that work by contact with said friction surfaces that consist of the cylindrical surfaces of drums (13, 14) fixed to the wheels (2, 3).

11. Braking device (1) according to claim 4) **characterised in that** said means of attrition consist of pads that work by contact with said friction surfaces that consist of disks fixed to the wheels.
